# EUROPEAN PATENT SPECIFICATION

(11) **EP 0 377 815 B1**
(45) Date of publication and mention of the grant of the patent: **01.02.1995**
(21) Application number: 89121872.9
(22) Date of filing: 27.11.1989
(51) Int. Cl.: H02K 5/10, H02K 9/26

(54) **Protection means for in- and outlets of ventilation air in electric rotating machines**
Schutzmittel für Ein- und Auslass der Ventilationsluft in elektrischen Drehmaschinen
Moyens de protection pour l'entrée et la sortie de l'air de ventilation dans les machines électriques rotatives

(30) Priority: 13.01.1989 IT 8550689
(43) Date of publication of application: 18.07.1990
(73) Proprietor: MECC ALTE S.p.A., I-36051 Creazzo (Vicenza) (IT)
(72) Inventor: Arcaro, Carlo, I-36070 Castelgomberto Vicenza (IT)
(74) Representative: Bonini, Ercole

(56) References cited:
- GB-A- 112 939
- GB-A- 2 112 585
- GB-B- 178 262

## Description

The invention concerns the protections for the in- and outlets of ventilation air in open electric rotating machines. As it is known, one of the criteria following which electric rotating machines are classified, concerns the type of protection toward the exterior of the electric circuits contained within the housing of the electric rotating machine.

International standards define different degrees of protection. As far as the degree of mechanical protection is concerned, the standards define it through designations consisting of the letters IP followed by a two-digit number. The first digit represents the degree of protection against the penetration of solid bodies, the second digit represents the degree of protection against the penetration of liquid substances. For instance, an electric rotating machine with an IP 45 protection must be protected so against the penetration of solid bodies, that no solid body having a dimension smaller than 1 millimeter can penetrate and such a protection against the penetration of liquid substances as to prevent the penetration of water under pressure aimed at the machine from any direction through a hose having pre-determined dimensions.

In order to reach such a degree of protection, the electric rotating machines of the known type are now inserted in a closed housing and heat exchangers may or may not be used. Should the heat exchangers not be used, the inconvenience consists in the fact that the machines must be built with larger dimensions, since a sufficient cooling of both the mechanical and electric components must be guaranteed even in the absence of a ventilation system.

The GB-A-112 939 document discloses a protection element for ventilation openings of electrical machines which comprises a grid and a labyrinth consisting of a set of vertically arranged strips. In such a document there is no mention about the possibility to connect or to disconnect this device from the machine.

The purpose of the present invention is to overcome the above mentioned inconveniences.

The main purpose of the invention is to obtain protection means to be applied at the inlet and at the outlet of the ventilation air of electric rotating machines, such as to allow the construction of an open-type machine and to decrease its dimensions while granting an IP 45 degree of protection.

Another purpose of the invention is to obtain protection means for the inlet and outlet openings of the ventilation air of electric rotating machines which are not an integral part of the machine itself, since they can be removed from it and applied again even in successive periods during the use of the machine on the part of its user.

The above mentioned purposes are fulfilled by the realization of means protecting the inlets and outlets of the ventilation air of electric rotating machines, which are suited to guarantee an IP 45 degree of protection and the main features of which are according to claim 1.

Advantageously, the invention realizes a machine with an IP 45 protection while its execution is open and, therefore, its dimensions are decreased, so that it is less expensive.

Moreover, as will be seen, the possibility of applying the protection means even at a later period permits a further decrease of costs, since an existing machine with a low degree of protection can be changed into an electric machine with a higher class of protection.

Further details of the present invention will become apparent from the detailed description given hereinafter, and from the drawings, wherein:
- Fig. 1 shows the electric rotating machine of the invention with the protection means of the invention applied to it;
- Fig. 2 shows an axonometric view of the protection for the inlet of the cooling air;
- Fig. 3 shows a partial magnified view of the labyrinth for the air inlet;
- Fig. 4 shows an axonometric view of part of the protection for the outlet of the cooling air;
- Fig. 5 shows a top view of the protection of Fig. 4.

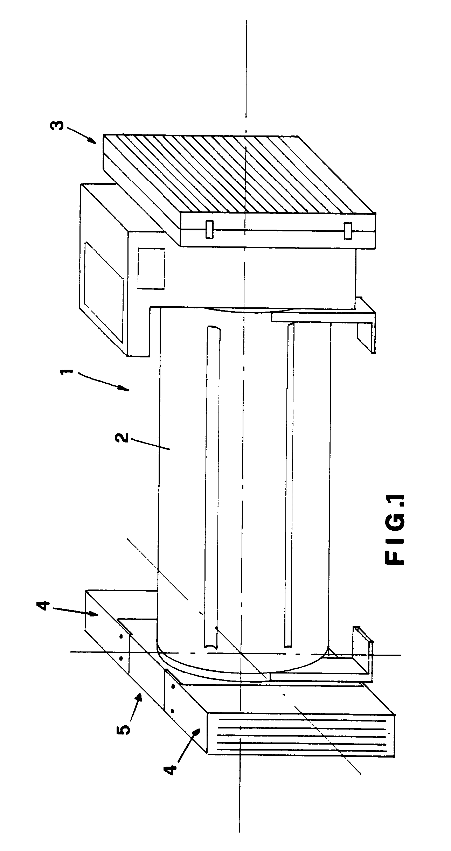

With reference to the above-mentioned Figures, it can be observed in Fig. 1 that the electric rotating machine, indicated as a whole with 1, comprises a housing 2, which presents at its backside a box-shaped element, indicated as a whole with 3, through which the ventilation air for the electric machine is let in. After the air has passed through the interior of the machine, it exits from the opposite side of the machine through two outlets opposed to each other, both placed perpendicularly in relation to the axis of the machine and through two protection elements, each of which is indicated as a whole with 4.

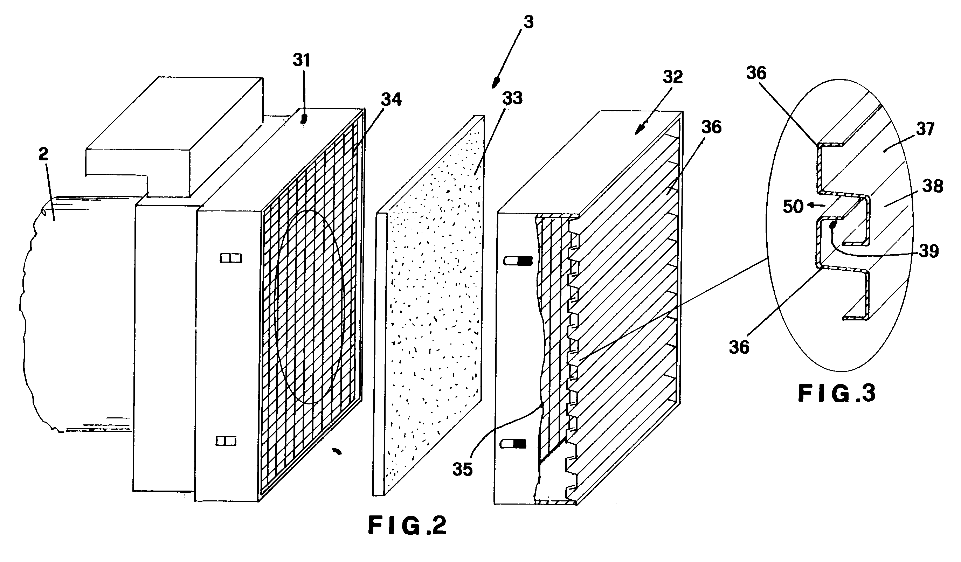

The protection element positioned at the air inlet, indicated with 3, as can be observed in Fig. 2, consists essentially of two parts, i.e. of a bottom 31 and a lid 32. Bottom 31 is permanently connected to the backside of the electric machine 2 and it has the shape of an open box with a grid 34, which acts as support of the filter element 33, made of spun-bonded-non-woven material. Said filter element is actually placed between grid 34 and another grid 35 which is on the lid 32 of element 3. The lid also has the shape of a box and presents two essentially parallel surfaces, one consisting of grid 35, while the other one consists of the labyrinth comprising a succession of metal strips 36, which, as can be observed in Fig. 3, are structural metal strips arranged horizontally and essentially shaped as a "S", wherein the upper part, indicated with 37, reenters towards the interior of the lid, while the lower part, indicated with 38, is essentially arranged on the outer surface of lid 32. Considering this arrangement, which can be observed in Fig. 3, it can be understood that a water jet from a hose coming from any direction will stop, at most, on the upper horizontal surface 39 and, therefore, will not penetrate through slit 50, which would let the water seep through grid 35, through filter 33 and the next grid 34, to then enter directly into the interior of the machine. As far as the withholding of solid particles with dimensions smaller than 1 mm is concerned, in accordance with the standards relating to IP 45, eventual solids suspended in the air are withheld by filter 33. For this reason the grids 34 and 35 only have the task of supporting filter 33 and not that of withholding possible solid bodies. The overall surface of the opening for the inlet air passing through the labyrinth is larger than the section of the inlet for the cooling air entering into the machine, this because of obvious reasons having the purpose of preventing an excessive slow-down of the air flux and of avoiding also the clogging of filter 33 after only a few hours of operation. The protection element 3 at the inlet, therefore, fulfils completely its task of withholding particles having a size not exceeding 1 mm and of preventing the penetration of water which, as has been seen, can only flow on the outer surface of the structural metal strips, thanks to the labyrinth-like shape of the inlet.

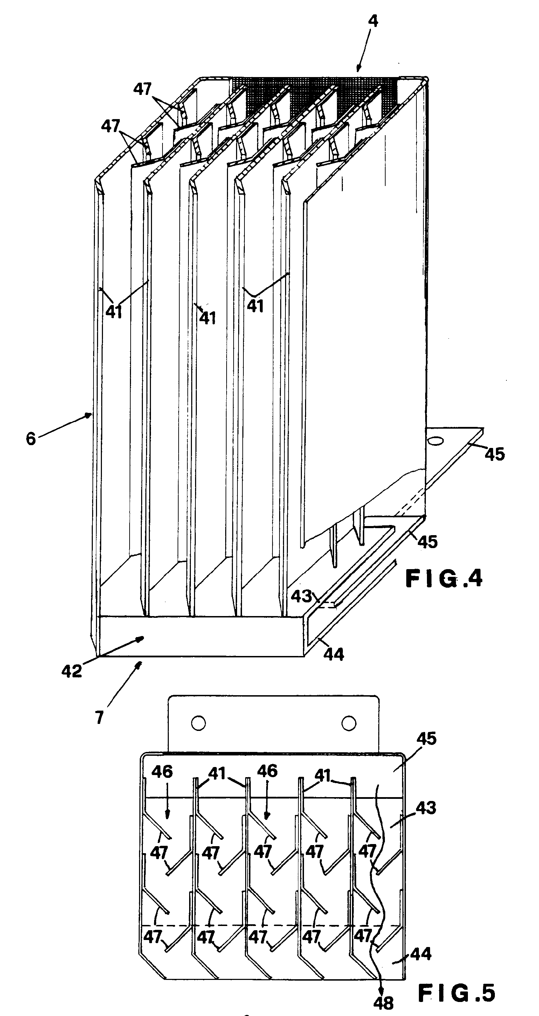

As far as the protection element 4 is concerned, which is visible in all its details in the axonometric representation of Fig.4, it can be observed that it presents a bottom support 45, through which it is hooked on to the front-side 5 of the housing 2 of the electric machine.

This protection element has an essentially prismatic outer shape. It can be observed in Fig. 4 that the protection screen is only partially represented, so as to better emphasize its inner structure. It is, however, obvious, that the missing upper part is exactly like the lower part represented in the drawing.

Within the box-like protection element are arranged a plurality of vertical partition walls 41 which run through the entire height of the protecting screen 4, while their ends rest on a horizontal metal sheet which is bent in the shape of a "C", indicated with 42, and which presents two surfaces 43 and 44, parallel with each other. Between them is inserted the bottom support 45. Said labyrinth-like conformation of the bottom of the protection element 4 permits the discharge of water which may eventually have penetrated into the front-side 6 for the air outlet and, at the same time, it prevents water from penetrating even if it is directed from the bottom, that is from direction 7. Between the partition walls 41 a plurality of channels 46 come into being, through which the ventilation air coming out of the machine will be channeled and exit through the air outlet opening 6.

As can be observed also in Fig. 5, each of said partition walls 41, presents a plurality of deflecting walls 47 which consist of metal sheet elements, which are bent and welded to the partition walls. These elements are arranged alternatively on both opposite surfaces of each partition wall 41 and they are all oriented in the direction converging toward the center of channel 46 and in the direction of the outlet of the ventilation air of the electric rotating machine.

It can easily be observed that the arrangement and orientation of the flat deflecting walls 47 are such as not to prevent in any way the discharge of the machine ventilation air, while the penetration of liquid substances from the exterior, such as water from a hose, is prevented. In fact, as can be observed in Fig. 5, while the outgoing air flux is channelled through the channels 47 following the path indicated by the wave-like line 48 does not meet any obstacle, water which perchance might attempt to enter, would at most overcome the first barrier constituted by the first or the second deflecting wall.

The third deflecting wall prevents the water from penetrating any further.

The water which has been stopped by the deflecting wall 47 will be discharged vertically downwards and flow to the exterior through the labyrinth created by the metal sheets 42 and 45, which are at the bottom of the protection element 4.

On the basis of what has been described it can be understood that the invention fulfils all the proposed purposes.

First of all, the main purpose of obtaining an open machine with an IP 45 degree of protection has been reached.

It has, in fact, been explained, that the in- and outlet of the cooling air can freely occur, so that the machine can be manufactured in the open version, while the protection means actually do prevent solid bodies from entering thanks to the presence of filter 33 and water coming from any direction from penetrating both at the inlet and at the outlet of the cooling air.

Experimental tests have made it possible to ascertain that the protecting screens according to the invention, when applied to electric rotating machines prevent the penetration through the air in- and outlets of a water jet aimed from a hose at a pressure of 3 bars and this proves that the protecting screens according to the invention optimally ensure a protection corresponding to an IP 45 degree.

Moreover, the protecting screens according to the invention can be applied to any open-type electric machine, since they can be attached to it at any time, the only operation necessary to this purpose being the pre-arrangement of the brackets for the connecting between said protection means and the electric machine.

During the manufacturing phases the shape of the labyrinths of the inlet protection 3 or of the flat deflecting walls of protection 4, or their number can be changed, as can be varied the number of the partition walls 41, which limit the channels 46 within the protection screen placed at the air outlet. The open box-shaped external structure of the protected means according to the invention may also be changed.

Moreover, the protection means 3 and 4, which in the description of a preferred embodiment are made of metal, may also be made of plastic or other suitable materials. It is however understood that said changes and modifications will not exceed the scope of the invention, such as it is claimed hereafter.

## Claims

1. Protection means for the inlet and outlet of the ventilation air of an electric rotating machine (1) suited to guarantee an IP 45 degree of protection on open-type machines comprising an inlet protection element (3) positioned at the inlet of the airflow of the electric machine (1) with a grid and a labyrinth made with a set of overlapping strips (36),
characterized in that said inlet protection element comprises a bottom part (31) positioned at the electric rotating machine air inlet and a box-shaped lid part (32) having essentially parallel inner and outer surfaces, the lid part inner surface and the bottom part (31) each presenting to each other a grid (35,34) with a filtering element (33) being positioned therebetween, the outer surface of the lid part (32) having the opening for the inlet air and having a labyrinth like structure, the strips (36) of the labyrinth being horizontally arranged and positioned vertically with respect to one another and shaped such that in their upper part they present an indentation (37), the shape of which corresponds to the shape of the lower part protruding towards the exterior,
and in that the protection means further comprises an outlet protection element (4) having a substantially prismatic open box-shaped structure including at its interior a plurality of vertical partition walls (41) forming between eachother a plurality of channels (46) oriented in the direction of the airflow of the electric rotating machine, each of said partition walls (41) presenting a plurality of deflecting walls (47) arranged alternately on both opposite surfaces of each partition wall (41) converging toward the centers of the channels (46) and oriented toward the direction of the outlet of airflow of the rotating machine,
said lid part (32) of inlet protection element (3) and said outlet protection element (4) being detachable from the electric rotating machine.

2. Protection means according to claim 1, characterized in that the strips (36) of the labyrinth of the inlet protection element (3) are essentially "S" or "Z" shaped.

3. Protection means according to claim 1, characterized in that the outlet protection element (4) presents a bottom consisting of a horizontal metal sheet (42) bent in a "C" shape, presenting two horizontal surfaces (43,44) which are parallel to each other, and yet another lower flat metal sheet (45) being placed between the two surfaces (43,44), thereby creating a labyrinth-like structure.

## Patentansprüche

1. Schutzmittel für das Eintreten und das Austreten von Ventilationsluft einer elektrischen drehenden Maschine (1), die eine IP 45 Schutzleistung bei geöffneter Maschinen gewährleistet und ein Eintrittschutzelement einschließt (3), das sich bei dem Eintritt der Luft (1) in die Maschine befindet und mit einem Gitter und einer aus überlappenden Streifen (36) bestehenden Labyrinthdichtung versehen ist, und das erwähnte Eintrittschutzelement einen Boden (31) bei dem Lufteintritt von der elektrischen drehenden Maschine und einen Deckel (32) einschließt, die parallele innere und äußere Oberflächen aufweisen und die innere Oberfläche und der Boden (31) je sich gegenseitig ein Gitter (35,34) darbieten, mit einem sich dazwischen befindenden filtrierenden Element (33), wobei die äußere Oberfläche des Deckels (32) eine Öffnung für die Eintrittsluft und die Struktur eines Labyrinthes aufweist, indem die Streifen (36) der Labyrinthdichtung waagerecht geordnet und senkrecht angebracht sind und deren Form auf dem oberen Teil eine Aushöhlung aufweist (37), deren Form der Form des unteren nach außen hervortretenden Teils entspricht,
und die Schutzmittel ein Ausgangsschutzelement (4) einschliessen, das eine substantiell prismatische geöffnete Schachtel-Struktur aufweist, die innen eine Menge von senkrechten Trennwände (41) einschließt, die miteinander eine Serie von Kanälen (46) in der Richtung des Luftstroms der elektrischen drehenden Maschine bilden, und jede obengenannte Trennwand (41) eine Serie von auf beiden Oberflächen der Trennwand wechselweise angebrachten ablenkenden Wänden aufweist (47), die gegen die Mitte des Kanals(46) konvergieren und nach der Richtung vom Luftausgang der drehenden Maschine gerichtet sind,
der erwähnte Deckel des Eintrittschutzelements (3) und das erwähnte Ausgangschutzelement (4) können von der elektrischen drehenden Maschine getrennt werden.

2. Schutzmittel nach Patentanspruch 1 dadurch gekennzeichnet, daß die Streifen (36) der Labyrinthdichtung des Eintrittschutzelements (3) im Grunde eine "S" oder "Z" Form haben.

3. Schutzelement nach Patentanspruch 1 dadurch gekennzeichnet, daß das Ausgangschutzelement (4) einen Boden aufweist, der aus einem in der Form von "C" gebogenen waagerechten Metallblatt (42) besteht, und zwei gegenseitig parallele waagerechte Öberflächen (43,44) hat, und noch ein anderes niedrigeres Metallblatt (45), das sich zwischen den zwei Öberflächen (43,44) befindet, so daß eine Labyrinth-Struktur erzeugt wird.

## Revendications

1. Moyens de protection de l'entrée et de la sortie de l'air de ventilation d' une machine électrique rotative (1) apte à garantir un degré de protection IP 45 sur des types de machines ouvertes, comprenant un élément de protection d'entrée (3) positionné à l'entrée du flux d'air de la machine électrique (1) avec une grille et un labyrinthe composé d' un ensemble de bandes superposées (36),
characterisés en ce que le dit élément de protection d'entrée comprend un fond (31) positionné à l'entrée de l'air de la machine électrique rotative et un couvercle en forme de boîte (32) ayant des surfaces intérieures et extérieures essentiellement parallèles, la surface intérieure du couvercle et le fond (31) présentant chacun l'une en face à l'autre une grille (35, 34) ayant un élément filtrant (33) positionné entre eux, la surface extérieure du couvercle (32) ayant l'ouverture pour l'entrée de l'air et ayant une structure en labyrinthe, les bandes (36) du labyrinthe étant disposées horizontalement et positionnées verticalement l'une en relation à l'autre et façonnées ainsi que en leur partie supérieure elles présentent une dentelure (37), dont la forme correspond à la forme de la partie inférieure saillant vers l'extérieur,
et en ce que les moyens de protection comprenant en plus un élément de protection de sortie (4) ayant une structure en forme de boîte ouverte substantiellement prismatique comprenant à son intérieur une pluralité de cloisons verticales (41) formant entre l'une l'autre une pluralité de canaux (46) orientés suivant la direction du flux d'air de la machine électrique rotative, chacune de dites cloisons (41) présentant une pluralité de parois défléchissantes (47) disposées alternativement sur les deux surfaces opposées de chaque cloison (41) convergent vers les centres des canaux (46) et orientées vers la direction de la sortie du flux d'air de la machine rotative,
le dit couvercle (32) de l'élément de protection de l'entrée (3) et le dit élément de protection de la sortie (4) pouvant être détachés de la machine électrique rotative.

2. Moyens de protection selon la revendication 1, caractérisés en ce que les bandes (36) du labyrinthe de l'élément de protection de l'entrée (3) sont essentiellement façonnés en "S" ou "Z".

3. Moyens de protection selon la revendication 1, caractérisés en ce que l'élément de protection de la sortie (4) présente un fond consistant en une feuille de métal horizontale (42) pliée en forme de "C", présentant deux surfaces horizontales (43, 44) qui sont parallèles l'une à l'autre, et encore un autre feuille de métal plat inférieure (45) étant positionnée entre les deux surfaces (43, 44), de cette manière formant une structure en labyrinthe.
